# DEMANDE DE BREVET EUROPEEN

(11) **EP 1 927 763 A1**
(43) Date de publication de la demande: **04.06.2008**
(21) Numéro de dépôt: 07119726.3
(22) Date de dépôt: 31.10.2007
(51) Int. Cl.: F16B 2/22, F16B 5/06, F16B 37/04

(54) **Système de liaison d'un organe de véhicule automobile à une partie fixe de ce véhicule**

(30) Priorité: 28.11.2006 FR 0655156
(71) Demandeur: Peugeot Citroen Automobiles SA, 78943 Vélizy-Villacoublay Cedex (FR)
(72) Inventeur: Boudard, Emmanuel, 78960 Voisins le Bretonneux (FR); Hillairet, Blandine, 92500 Rueil-Malmaison (FR); Janssen, Benjamin, 95410 Groslay (FR)
(74) Mandataire: Ménès, Catherine

(57) **Abrégé**

L'invention concerne un système de liaison d'un organe de véhicule automobile à une partie fixe de ce véhicule.

Le système de liaison est destiné à se désolidariser en cas d'application à l'organe d'un effort ayant une intensité supérieure à une valeur seuil. Il comprend une patte mobile (2) rigidement solidaire de l'organe et une patte fixe (1) rigidement solidaire de la partie fixe, ces deux pattes (1, 2) sont encliquetées l'une dans l'autre au niveau d'une liaison (3, 4) incluant une partie mâle (3) s'engageant dans une partie femelle (4). Cette liaison par encliquetage est dimensionnée pour se désolidariser totalement ou partiellement sur application d'un effort ayant une intensité supérieure à une valeur seuil.

L'invention s'applique au domaine de la sécurité passive.

## Description

L'invention concerne un système de solidarisation d'un organe de véhicule automobile à une partie fixe de ce véhicule, destiné à se désolidariser en cas d'application à l'organe d'un effort ayant une intensité supérieure à une valeur seuil.

Les fabricants de véhicules doivent respecter des impératifs pour que le capot d'un véhicule absorbe de l'énergie en cas de choc avec un piéton, en particulier avec sa tête, de manière à minimiser l'action de ce choc sur ce dernier.

Cette contrainte se traduit généralement par une hauteur minimale sous le capot, encore appelée espace sous capot, devant séparer la surface inférieure du capot des organes situés dans l'espace moteur.

Ces organes sont par exemple des tuyaux de suralimentation, un filtre à air ou autre, qui sont montés sous le capot en étant solidarisés à des organes fixes du véhicule, tels qu'une aile ou une partie de châssis.

Dans certains cas il est quand même nécessaire de fixer des organes dans l'espace sous capot. Ces organes sont alors fixés au moyen de systèmes de liaison, tels que des pattes sécables, qui se rompent lorsque l'effort appliqué à l'organe dépasse un certain seuil.

Il est cependant difficile de modéliser de façon fiable de tels systèmes de fixation, car le seuil de rupture dépend de paramètres extérieurs tels que la température et l'humidité environnante, le délai d'absorption et les sollicitations antérieures du système.

Le but de l'invention est de remédier à cet inconvénient.

A cet effet, l'invention concerne un système de solidarisation d'un organe de véhicule automobile à une partie fixe de ce véhicule, destiné à se désolidariser en cas d'application à l'organe d'un effort ayant une intensité supérieure à un seuil, caractérisé en ce qu'il comprend une liaison par encliquetage dimensionnée pour se désolidariser totalement ou partiellement sur application d'un effort ayant une intensité supérieure à un seuil.
L'invention ne fait ainsi pas appel à une rupture programmée de pattes sécables.

L'invention concerne également un système de liaison tel que défini ci-dessus, dans lequel la liaison comprend une partie mâle et une partie femelle, la partie mâle étant apte à coulisser dans la partie femelle, l'une des parties comportant une butée située en vis-à-vis d'une extrémité de l'autre partie, l'extrémité de l'autre partie et/ou la butée étant pourvue d'une face oblique par rapport à la direction de coulissement, et dans lequel l'extrémité de la partie mâle est prévue flexible pour échapper à la butée en glissant sur la face oblique en cas d'application d'un effort ayant une intensité supérieure au seuil.
dans lequel la liaison comprend une partie mâle et une partie femelle, la partie mâle étant apte à coulisser dans la partie femelle qui comprend une butée située en vis-à-vis d'une extrémité de la partie mâle, l'extrémité de la partie mâle et/ou la butée étant pourvue d'une face oblique par rapport à la direction de coulissement, et
dans lequel l'extrémité de la partie mâle est prévue flexible pour échapper à la butée en glissant sur la face oblique en cas d'application d'un effort ayant une intensité supérieure au seuil.

L'invention concerne également un système de liaison tel que défini ci-dessus, dans lequel la partie femelle comprend une surface de coulissement sur laquelle vient en appui la partie mâle, et deux guides situés de part et d'autre de cette surface pour guider les déplacements de la partie mâle sur la surface, au moins un guide comprenant une tête rabattue en vis-à-vis de la surface de coulissement, pour maintenir la partie mâle en appui sur la surface de coulissement.

L'invention concerne également un système de liaison tel que défini ci-dessus, dans lequel les guides sont flexibles pour libérer la partie mâle en s'écartant l'un de l'autre lorsque la liaison est sollicitée selon une direction normale à la direction de coulissement.

L'invention concerne également un système de liaison tel que défini ci-dessus, dans lequel la partie femelle est pourvue d'un ergot s'engageant dans une cavité de la partie mâle pour l'immobiliser tant que l'effort appliqué à l'organe a une intensité inférieure à la valeur seuil.

L'invention concerne également un système de liaison tel que défini ci-dessus, dans lequel l'ensemble de la partie mâle et de la partie femelle sont réalisés dans un matériau flexible tel que du plastique.

L'invention sera maintenant décrite plus en détail et en référence aux figures ci-annexées :
- la figure 1 est une vue schématique en coupe d'un système de liaison selon l'invention,
- la figure 2 est en vue de face du système de liaison de la figure 1,
- la figure 3 est en vue en coupe du système de liaison de la figure 1 et 2 lors d'une première désolidarisation partielle,
- la figure 4 est une vue en coupe du système de liaison de la figure 1 et 2 lors d'une seconde désolidarisation partielle, et
- la figure 5 est une vue en coupe du système de liaison des figures 1 et 2 lors d'une troisième désolidarisation partielle.

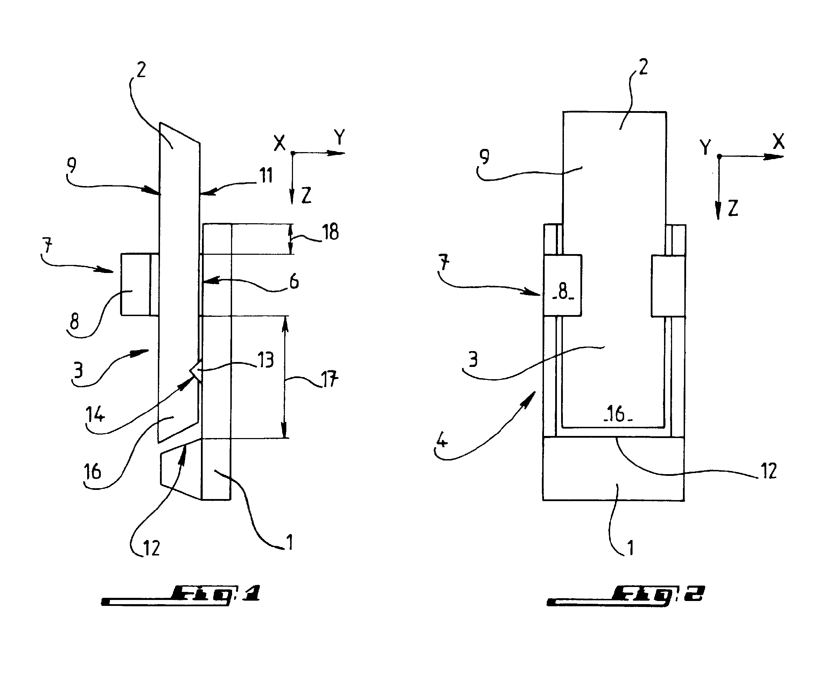

Le système de liaison selon l'invention qui est représenté sur la figure 1 comprend une patte dite fixe, solidaire d'un organe fixe non représenté, et une patte dite mobile 2 solidaire d'un organe non représenté.

Conformément à l'invention, les pattes 1 et 2 sont solidarisées l'une à l'autre par encliquetage, par une liaison comprenant des parties élastiquement déformables permettant une désolidarisation partielle ou totale si un effort supérieur à une valeur seuil est appliqué.

Dans l'exemple des figures, la patte mobile 2 se termine par une partie mâle 3 de forme sensiblement parallélépipédique. Cette partie mâle s'engage dans une partie femelle correspondante 4 de la patte fixe 1, ces parties mâle et femelle étant sensiblement allongées selon une même direction correspondant à l'axe Z d'un repère XYZ représenté sur les figures.

La partie mâle 3 est mobile en translation selon son axe longitudinal par rapport à la partie femelle 4 qui présente une surface de coulissement 6 sur laquelle la partie mâle est maintenue en appui.

Afin de maintenir l'encliquetage pendant les déplacements de la partie mâle 3, la partie femelle comprend des guides 7 qui assurent le maintien de la partie mâle en appui sur la surface 6.

A cet effet, comme visible figure 2, les guides 7 sont situés sur la partie femelle 4, de part et d'autre de la surface 6, de manière à enserrer la partie mâle 3.

Ces guides 7 comprennent des extrémités ou têtes 8 rabattues en vis-à-vis de la surface 6 pour venir au contact d'une surface externe 9 de la partie mâle 3 parallèle à la surface 11 d'appui de cette partie mâle sur la surface 6.

Ainsi, les guides 7 limitent les déplacements de la partie mâle 3 selon les directions orthogonales à sa direction de coulissement, ces directions orthogonales correspondant aux axes X et Y du repère des figures.

La partie femelle 4 comprend une butée portant une face 12 orientée de façon oblique par rapport à l'axe Z de coulissement. Cette butée est située dans le prolongement de la partie mâle 3 pour limiter les translations de celle-ci.

En variante, une deuxième butée non représentée peut être située sur la partie femelle 4 de façon à limiter les translations de celle-ci en direction opposée.

La partie femelle 4 comprend un ergot 13 s'engageant dans une cavité 14 située au niveau de la surface 11 de la partie mâle pour bloquer la partie femelle en position dans la partie femelle lorsque la liaison n'est pas sollicitée.

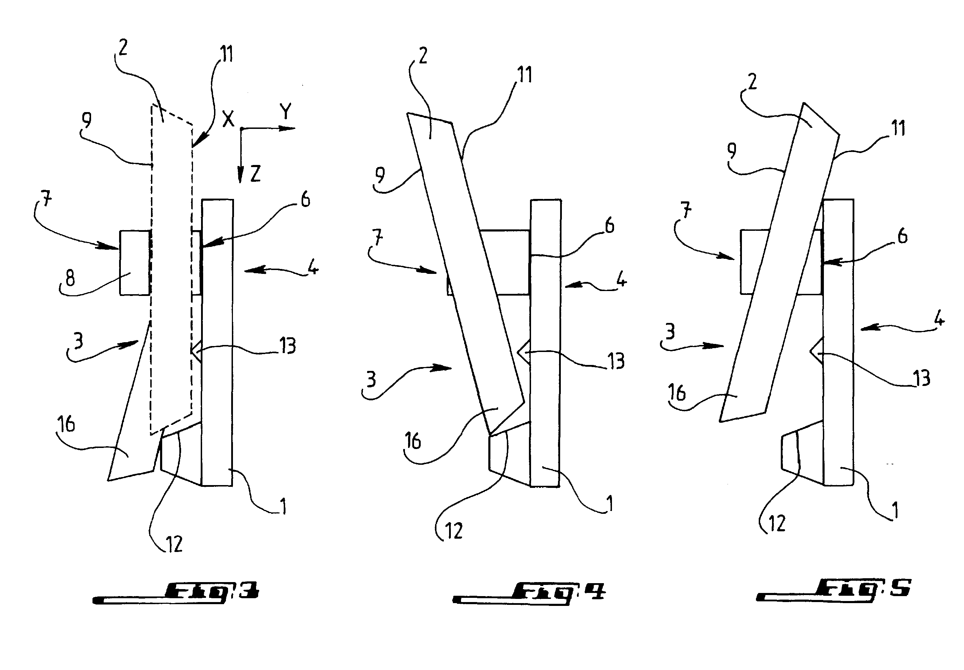

Comme visible figure 3, l'agencement et les dimensions de cette face oblique 12 permettent un échappement de la partie mâle lorsqu'un effort suffisant orienté selon la direction de coulissement est appliqué à la patte mobile.

Pour cela, la partie mâle a une extrémité 16 présentant également une face oblique par rapport à la direction de coulissement. Cette extrémité 16 est apte à fléchir autour de l'axe X normal à son axe de coulissement Z, et permettant à cette extrémité de glisser sur la face oblique 12 comme illustré en figure 3.

Une déformation entraînant une désolidarisation partielle peut également être obtenue en utilisant une partie élastique dans d'autres zones de la partie mâle ou de la partie femelle.

La longueur 17 mesurée entre la face 12 et les guides 7 est un paramètre déterminant pour définir le seuil d'effort nécessaire à une désolidarisation partielle de la liaison, ce seuil étant d'autant plus élevé que cette longueur 17 est courte.

Lorsque la liaison subit un effort latéral, c'est-à-dire orienté selon une direction Y perpendiculaire à l'axe de translation du système, le maintien de l'encliquetage est assuré par les guides 7 de translation et la partie mâle.

Lorsque cet effort latéral est orienté négativement sur l'axe Y en ayant une intensité dépassant un seuil prédéterminé, la partie femelle se déforme de façon élastique. Les deux guides 7 s'écartent alors l'un de l'autre pour libérer totalement ou partiellement la partie mâle, cette situation étant représentée sur les figures 4 et 5.

La longueur 17 entre la face oblique 12 et les guides 7 est déterminante pour définir le seuil d'effort, selon l'axe des Y négatifs, le couple exercé par la partie mâle sur les guides étant proportionnel à cette longueur.

La longueur 18, entre les guides 7 et l'extrémité 19 de la partie femelle 4 au voisinage de ces guides 7, est quant à elle déterminante pour définir le seuil d'effort en cas de sollicitation orientée positivement selon l'axe Y, ce qui correspond au cas de la figure 5.

Dans les deux cas décrits précédemment et correspondant aux figures 4 et 5, il apparaît que la position des guides 7 sur la partie femelle 4 détermine le point de rotation de la patte mobile 2 lorsqu'un effort entraîne un pivotement de cette patte mobile 2 par rapport à la patte fixe 1.

D'autres paramètres peuvent être pris en compte pour modéliser le comportement du système. Par exemple, les dimensions des guides 7 telles que leur hauteur, leur épaisseur, leur largeur, et leur longueur, ainsi que les dimensions des têtes 8.

Par ailleurs, la raideur ou élasticité de la partie mâle et la partie femelle conditionnent également le comportement de la liaison.

L'invention met ainsi en oeuvre un système de liaison par encliquetage pour rendre plus simples et plus fiables les modélisations du comportement de cette liaison, et donc son dimensionnement.

La forme du guidage peut être rectangulaire, trapézoïdale ou circulaire afin de réagir différemment aux sollicitations exercées sur la liaison.

L'invention présente aussi l'avantage de pouvoir être réalisable facilement avec des moulages plastiques connus et de permettre la réalisation de liaisons simples sans outils par simple encliquetage.

L'invention s'applique particulièrement bien aux systèmes de fixation de tubulures d'admission d'air, par exemple sur une culasse de moteur, ces conduites étant par exemple associées à un turbocompresseur ou à un filtre à air.

## Revendications

1. Système de solidarisation d'un organe (3) de véhicule automobile à une partie fixe (4) de ce véhicule, destiné à se désolidariser en cas d'application à l'organe (3) d'un effort ayant une intensité supérieure à un seuil, **caractérisé en ce qu'**il comprend une liaison (3, 4) par encliquetage bloquant les mouvements de l'organe (3) selon une première direction (Z) et dimensionnée pour se désolidariser totalement ou partiellement sur application d'un effort ayant une intensité supérieure à un seuil, ledit effort étant appliqué dans la première direction ou dans une deuxième direction (Y) perpendiculaire à la première, la désolidarisation permettant d'absorber de l'énergie d'un choc générant ledit effort.

2. Système selon la revendication 1, dans lequel la liaison comprend une partie mâle (3) et une partie femelle (4), la partie mâle (3) étant apte à coulisser dans la partie femelle (4), l'une des parties comportant une butée (12) située en vis-à-vis d'une extrémité (16) de l'autre partie, l'extrémité de l'autre partie et/ou la butée (12) étant pourvue d'une face oblique par rapport à la direction de coulissement, et dans lequel l'extrémité de la partie mâle (3) est prévue flexible pour échapper à la butée (12) en glissant sur la face oblique en cas d'application d'un effort ayant une intensité supérieure au seuil.

3. Système selon la revendication 2 dans lequel la partie femelle (4) comprend une surface de coulissement (6) sur laquelle vient en appui la partie mâle (3), et deux guides (7) situés de part et d'autre de cette surface (6) pour guider les déplacements de la partie mâle (3) sur la surface (6), au moins un guide (7) comprenant une tête (8) rabattue en vis-à-vis de la surface de coulissement (6), pour maintenir la partie mâle (3) en appui sur la surface de coulissement (6).

4. Système selon la revendication 3, dans lequel les guides (7) sont flexibles pour libérer la partie mâle en s'écartant l'un de l'autre lorsque la liaison est sollicitée selon une direction normale à la direction de coulissement.

5. Système selon la revendication 1, dans lequel la partie femelle (4) est pourvue d'un ergot (13) s'engageant dans une cavité (14) de la partie mâle (3) pour l'immobiliser tant que l'effort appliqué à l'organe a une intensité inférieure à la valeur seuil.

6. Système selon l'une des revendications précédentes dans lequel l'ensemble de la partie mâle (3) et de la partie femelle (4) sont réalisés dans un matériau flexible tel que du plastique.

7. Application du système de solidarisation selon l'une quelconque des revendications 1 à 6 à la fixation de tubulures d'admission d'air sur un moteur.
